# EUROPÄISCHE PATENTSCHRIFT

(11) **EP 3 201 934 B1**
(45) Veröffentlichungstag und Bekanntmachung des Hinweises auf die Patenterteilung: **02.10.2019**
(21) Anmeldenummer: 15793725.1
(22) Anmeldetag: 26.10.2015
(51) Int. Cl.: H01H 3/32, H01H 3/54, H01H 3/60

(54) **VORRICHTUNG, AUFWEISEND EINE GETRIEBEANORDNUNG MIT EINER ÜBERHOLKUPPLUNG MIT FREILAUFGLIED.**
DEVICE COMPRISING A TRANSMISSION ASSEMBLY HAVING AN OVERRIDE CLUTCH WITH A FREEWHEELING MEMBER
DISPOSITIF, POSSÉDANT UN SYSTÈME D'ENGRENAGE AVEC UN ACCOUPLEMENT DE RATTRAPAGE AVEC ÉLÉMENT À COURSE LIBRE

(30) Priorität: 28.11.2014 DE 102014224405
(43) Veröffentlichungstag der Anmeldung: 09.08.2017
(73) Patentinhaber: Siemens Aktiengesellschaft, 80333 München (DE)
(72) Erfinder: BARTZ, Michael, 12627 Berlin (DE); DUWE, Oliver, 14776 Brandenburg an der Havel (DE); LÖBNER, Friedrich, 10245 Berlin (DE)
(86) Internationale Anmeldenummer: PCT/EP2015/074709
(87) Internationale Veröffentlichungsnummer: WO 2016/083042

(56) Entgegenhaltungen:
- EP-A1- 0 954 892
- WO-A1-2014/114489
- US-A1- 2013 341 166

## Beschreibung

Die Erfindung bezieht sich auf eine Vorrichtung, aufweisend eine Getriebeanordnung mit einer ersten Überholkupplung, insbesondere zur Übertragung eines Drehmomentes, welche einen ersten Kuppelpartner und einen zweiten Kuppelpartner aufweist, die in Abhängigkeit einer Lastflussänderung zwischen den Kuppelpartnern einkuppeln oder auskuppeln.

Eine derartige Vorrichtung ist beispielsweise aus der Auslegeschrift DE 1134445 bekannt. Dort ist eine Vorrichtung beschrieben, welche eine Getriebeanordnung aufweist, um einen Federkraftspeicher zu spannen. Die dortige Getriebeanordnung ist auch mit einer ersten Überholkupplung ausgestattet, welche einer Übertragung eines Drehmomentes dient. Dabei weist die Überholkupplung einen ersten Kuppelpartner sowie einen zweiten Kuppelpartner auf. In Abhängigkeit einer Lastflussänderung zwischen den Kuppelpartnern erfolgt ein Einkuppeln oder ein Auskuppeln. Durch eine derartige Anordnung ergibt sich ein raumsparender Aufbau, wobei die Möglichkeit besteht, ein Nachspannen des dortigen Federkraftspeichers vorzunehmen.

Die dortige Überholkupplung weist einen robusten Aufbau auf, wodurch große Drehmomente zuverlässig übertragen werden können. Das Kupplungsverhalten der bekannten Überholkupplungen, wie z. B. aus der US 2013/0341166 A1 bekannt, ist als hart einzuschätzen, wodurch bei einem Einkuppeln bzw. Auskuppeln der Kuppelpartner Impulse in die dortige Getriebeanordnung eingespeist werden können. Derartige Impulse können zu Störungen und zusätzlichen mechanischen Belastungen innerhalb der Vorrichtung führen, wodurch die Langlebigkeit der dortigen Vorrichtung beeinträchtigt sein kann.

US 2013/0341166 A1 offenbart eine Vorrichtung gemäß dem Oberbegriff des Anspruchs 1.

Entsprechend ist es Aufgabe der Erfindung, eine Vorrichtung mit einer Getriebeanordnung der eingangs genannten Art derart auszubilden, dass ein langzeitstabiler Betrieb ermöglicht ist.

Erfindungsgemäß wird die Aufgabe bei einer Vorrichtung der eingangs genannten Art dadurch gelöst, dass der ersten Überholkupplung ein Freilaufglied zugeordnet ist, welches ein Einkuppeln der Kuppelpartner, insbesondere zeitweise, neutralisiert, wobei über das Freilaufglied eine elastische Verbindung eines Kuppelpartners mit einem weiteren Getriebeelement gebildet ist.

Die Kuppelpartner einer Überholkupplung sind relativ zueinander bewegbar. Beispielsweise können die Kuppelpartner eine lineare Relativbewegung oder auch eine angulare Relativbewegung usw. relativ zueinander vollziehen. Bevorzugt sollten die Kuppelpartner jedoch der Übertragung eines Drehmomentes dienen, wobei die Kuppelpartner relativ zueinander drehbar angeordnet sind. Bevorzugt sollten die Rotationsachsen der Kuppelpartner zueinander koaxial ausgerichtet sein. Im eingekuppelten Zustand vollziehen die Kuppelpartner eine synchrone Bewegung, d. h. der Schlupf zwischen den Kuppelpartnern ist bevorzugt gegen Null tendierend. Mittels der Überholkupplung ist in Abhängigkeit der Richtung eines Lastflusses eine Drehbewegung (ggf. eine alternative Bewegungsform) von dem einen Kuppelpartner auf den anderen Kuppelpartner übertragbar. Die Kuppelpartner sind relativ zueinander bewegbar angeordnet. In Abhängigkeit der Lastflussrichtung/eines Lastflusswechsels zwischen den Kuppelpartnern zu können die Kuppelpartner voneinander getrennt werden, d. h. auskuppeln, so dass ein Kraft- bzw. Momentenübertragung zwischen den Kuppelpartnern unterbrochen ist. Bei einer Umkehr der Lastflussrichtung kann es zu einem Einkuppeln der Kuppelpartner kommen, wodurch eine Kraft- bzw. Momentenübertragung zwischen den Kuppelpartnern kommt. An einer Überholkupplung, welche eine rotatorische Bewegung überträgt, kann der eine Kuppelpartner treibend sein, wodurch ein Lastfluss auf einen getriebenen Kuppelpartner übertragen werden kann, wenn dieser eingekuppelt ist. Bei einem Überholen des treibenden Kuppelpartners durch den getriebenen Kuppelpartners kommt es zu einem Auskuppeln (Lastflusswechsel). So ist es beispielsweise möglich, innerhalb eines Getriebes eine bevorzugte (zugelassene) Lastflussrichtung vorzusehen und bei einer Umkehr des Lastflusses, beispielsweise bei einem z.B. unerwünschten schnelleren Bewegen des getriebenen Kuppelpartners, ein Auskuppeln vorzusehen.

Je nach Bedarf kann die Überholkupplung verschiedenartig aufgebaut sein. Beispielsweise kann die Überholkupplung als Klemmkörperfreilauf ausgeführt sein, wobei Klemmkörper in Abhängigkeit eines Lastflusses in eine Klemmstellung verbracht werden und so eine Kraft- bzw. Momentenübertragung erfolgen kann. Alternativ können auch Überholkupplungen nach Art einer Sperrklinke oder auch nach Art einer Schlingfeder usw. ausgeführt werden. All diesen Überholkupplungen ist gemein, dass bei einem Wechsel des Lastflusses zwischen den beiden Kuppelpartnern ein Entkuppeln bzw. ein Einkuppeln der Überholkupplung erfolgt. Üblicherweise ist es von Vorteil, wenn ein Einkuppeln bzw. ein Auskuppeln unmittelbar mit Auftreten einer Lastflussänderung erfolgt. Dies führt dazu, dass ein rasches Ansprechen der Überholkupplung realisiert werden kann. Ein rasches Ansprechen kann innerhalb der Getriebeanordnung zu unerwünschten Impulsen führen, die sich auf weitere Getriebeelemente ausdehnen können. Insbesondere Lagerschalen, Wellen, Führungselemente usw. können verfrüht ausschlagen, bzw. müssen entsprechend den zu erwartenden Impulsen, überdimensioniert ausgelegt werden.

Sieht man nunmehr die Verwendung eines Freilaufgliedes vor, so kann dieses Freilaufglied dazu genutzt werden, ein Einkuppeln der Kuppelpartner insbesondere zeitweise zu neutralisieren, d. h. es kann ein unmittelbares Einkuppeln der Kuppelpartner bei Lastflusswechsel zugelassen werden, wobei das Freilaufglied zumindest vorübergehend die Wirkung der gekuppelten Kuppelpartner neutralisiert. Das Freilaufglied kann beispielsweise als Totzeitglied wirken, wodurch eine Leerbewegung durch das Freilaufglied ermöglicht wird. Während sich diese Leerbewegung vollzieht, kann ein von einem Einkuppeln der Kuppelpartner ausgehender Impuls abgebaut werden, wodurch dessen Auswirkung auf weitere Getriebeelemente gemindert ist. Bevorzugt kann dabei das Freilaufglied derart ausgelegt sein, dass lediglich zum Beginn eines Lastwechsels an der Überholkupplung das Freilaufglied für ein bestimmtes Zeitintervall wirksam ist. Dieses Zeitintervall kann durch eine Dimensionierung einer freien Wegstrecke (Leerbewegung) des Freilaufgliedes bestimmt werden. Das Freilaufglied kann beispielsweise auch ein Verzehrelement aufweisen, welches die Energie des Impulses aufnimmt. Beispielsweise können Verzehrelemente vorgesehen sein, welche bei einem Einkuppeln einer reversiblen Verformung unterzogen werden. Ein Einkuppelimpuls kann in dem Freilaufglied gedämpft werden. Vorteil einer derartigen Anordnung ist, dass die Struktur der Überholkupplung erhalten bleibt und lediglich durch das zugeordnete Freilaufglied das Einkuppeln zeitverzögert erfolgt. Ein Auskuppeln kann unmittelbar erfolgen, so dass das Freilaufglied ein Auskuppeln nicht beeinflusst.

Das Freilaufglied bildet eine elastische Verbindung eines Kuppelpartners mit einem weiteren Getriebeelement, um eine Bewegung des Kuppelpartners, beispielsweise während eines Passierens einer freilaufenden Wegstrecke des Freilaufgliedes, zu dämpfen. So ist es beispielsweise möglich, ein Elastomer vorzusehen, welches bei einem Wirksamwerden des Freilaufgliedes, d. h. bei einem Einkuppeln der Kuppelpartner und einer neutralisierenden Wirkung durch das Freilaufglied, verformt wird. Des Weiteren können auch alternative reversibel verformbare Elemente genutzt werden, welche ebenfalls eine Dämpfung einer Bewegung eines der Kuppelpartner insbesondere im eingekuppelten Zustand bewirken. Beispielsweise ist es möglich, die elastische Verbindung an einem ortsfesten Lager einerseits zu positionieren und andererseits eine Verbindung zu einem der Kuppelpartner vorzusehen, so dass im eingekuppelten Zustand ein Spannen der elastischen Verbindung während des Wirkens des Freilaufgliedes erfolgt.

Eine weitere vorteilhafte Ausgestaltung kann vorsehen, dass das Freilaufglied eine freilaufende Wegstrecke aufweist, welche größer ist als eine nötige Wegstrecke einer Einkuppelbewegung zum Einkuppeln der Kuppelpartner.

Das Freilaufglied kann eine freilaufende Wegstrecke zulassen, innerhalb welcher eine Leerbewegung eines der Kuppelpartner ermöglicht wird. Dabei ist die freilaufende Wegstrecke größer auszulegen als die Wegstrecke, welche bei einem Lastflusswechsel zum Einkuppeln der Kuppelpartner notwendig ist. Dadurch besteht die Möglichkeit, dass ein Einkuppeln beispielsweise nahezu zeitgleich mit einem Einsetzen einer Leerbewegung/Freilaufbewegung am Freilaufglied erfolgt, wobei nach erfolgtem Einkuppeln noch ausreichende Reserve in der freilaufenden Wegstrecke vorliegt, um einen Einkuppelimpuls zu neutralisieren. Eine Freilaufbewegung kann beispielsweise mit einer Widerstandserhöhung einhergehen, so dass mit zunehmender Passage der freilaufenden Wegstrecke eine Abbremsung der Freilaufbewegung erfolgt. Zur Abbremsung kann beispielsweise ein insbesondere reversibel verformbares Verzehrelement genutzt werden. Vorteilhaft kann eine Wandlung bzw. ein "Verzehr" eines Einkuppelimpulses der Überholkupplung am Freilaufglied erzielt werden kann.

Es kann weiter vorteilhaft vorgesehen sein, dass einer der Kuppelpartner mit einem ersten Anschlag verbunden ist.

Die Nutzung eines Anschlages ermöglicht es, beispielsweise ein Begrenzen der freien Wegstrecke im Freilaufglied vorzunehmen. Dabei kann der erste Anschlag bevorzugt gegen eine Kraftwirkung bewegt werden. Bevorzugt kann mit zunehmender freier Wegstrecke des Kuppelpartners die Kraft, gegen welche er anbewegt werden muss, zunehmen. Über den ersten Anschlag kann eine Freilaufbewegung z.B. des zweiten Kuppelpartners begrenzt werden. Durch eine Positionierung des ersten Anschlages kann die freie Wegstrecke des Freilaufgliedes festgelegt werden. Der erste Anschlag kann mittelbar oder unmittelbar mit einem Kuppelpartner verbunden sein. Insbesondere im eingekuppelten Zustand kann ein winkelstarrer Verbund zwischen dem ersten Anschlag sowie beiden Kuppelpartnern vorliegen.

Dabei kann vorteilhaft vorgesehen sein, dass die erste Überholkupplung ein Lager für eine Welle bildet.

Die erste Überholkupplung kann als Lager für eine Welle dienen. Somit besteht die Möglichkeit, dass einerseits eine Drehbewegung der Welle in der als Lager wirkenden ersten Überholkupplung ermöglicht wird, andererseits kann bei einer Drehrichtungsumkehr der Welle eine Drehbewegung mit umgekehrten Richtungssinn durch die erste Überholkupplung blockiert werden. Die erste Überholkupplung kuppelt ein, da sich beispielsweise auf Grund einer Änderung des Drehsinns der Welle an der Überholkupplung ein Lastflusswechsel einstellt. Über das Freilaufglied erfolgt trotz eingekuppelter Kuppelpartner ein Neutralisieren des Blockierens einer Drehbewegung. Dazu kann das Freilaufglied beispielsweise nach Art einer Buchse ausgeführt sein, wobei die Buchse beispielsweise gegen eine Federkraft drehbewegbar ist. Eine derartige Drehbewegung kann durch ei Einkuppeln der Kuppelpartner der ersten Überholkupplung getrieben sein. Mit einem Einkuppeln der Kuppelpartner kann ein Blockieren einer unerwünschten Drehbewegung durch das Freilaufglied (z. B. eine Buchse) neutralisiert werden, so dass ein unmittelbares Blockieren der Welle verhindert ist. Stattdessen ermöglicht das Freilaufglied eine begrenzte Drehbewegung der Welle bei eingekuppelten Kuppelpartnern.

Es kann weiter vorteilhaft sein, dass an die Welle eine zweite Überholkupplung angekuppelt ist.

Die Welle mit der ersten Überholkupplung ihrerseits kann an eine zweite Überholkupplung angeschlossen sein. Die zweite Überholkupplung kann beispielsweise direkt auf der Welle sitzen. Es kann jedoch auch vorgesehen sein, dass die zweite Überholkupplung über ein Übersetzungs- bzw. Untersetzungsgetriebe mit der Welle verbunden ist. Die erste sowie die zweite Überholkupplung können unabhängig voneinander arbeiten und über eine Verbindung jeweils eines der Kuppelpartner sich gegenseitig beeinflussen.

Dabei kann voreilhaft vorgesehen sein, das die erste und die zweite Überholkupplung gleichsinnige Sperrwirkungen aufweisen.

Durch das Vorsehen gleichsinniger Sperrwirkungen der ersten sowie der zweiten Überholkupplung besteht die Möglichkeit, beispielsweise die zweite Überholkupplung zur Übertragung einer Bewegung an der Getriebeanordnung vorzusehen, wo hingegen die erste Überholkupplung einer Lagerung einer Welle dient. Entsprechend ergeben sich an der Welle Blockierrichtung und Freilaufrichtung, welche wiederum mit der zweite Überholkupplung in Wechselwirkung stehen. Damit können beispielsweise über die das Freilaufglied der ersten Überholkupplung an der zweiten Überholkupplung auftretende Verkeilungen bzw. Blockierungen zwischen den Kuppelpartnern der zweiten Überholkupplung durch ein Wirksamwerden des Freilaufgliedes gelöst werden.

Weiterhin kann dabei vorteilhaft vorgesehen sein, dass das Freilaufglied eine Bewegung eines der Kuppelpartner, insbesondere im eingekuppelten Zustand zwischen einem ersten und einem zweiten Begrenzungsanschlag ermöglicht.

Über das Freilaufglied kann eine Bewegung eines der Kuppelpartner unabhängig von dem Kuppelzustand, insbesondere im eingekuppelten Zustand zwischen einem erstem sowie einem zweitem Begrenzungselement ermöglicht werden. Das erste sowie das zweite Begrenzungselement begrenzen eine freie Wegstrecke des Freilaufgliedes, entlang welcher zumindest einer der Kuppelpartner hin- und herbewegt werden kann. So ist es beispielsweise möglich, im eingekuppelten Zustand, d. h. im blockierten Zustand der beiden Kuppelpartner bei einer Nutzung der ersten Überholkupplung als ein Lager für eine Welle ein unmittelbares Blockieren einer Drehbewegung der Welle bei einem Einkuppeln der ersten Überholkupplung zu verhindern. Ein Wirksamwerden des Einkuppelns der Kuppelpartner wird verzögert. Weiterhin kann durch das Vorsehen eines Verzehrelementes ein gedämpftes Wirksamwerden der eingekuppelten Kuppelpartner erzielt werden. Ein Einkuppeln der Überholkupplung erfolgt nach den bewährten Prinzipien, jedoch wird die Wirkung über das Freilaufglied neutralisiert/verzögert.

Eine weitere vorteilhafte Ausgestaltung kann vorsehen, dass das Freilaufglied sich bei einer Lastflussänderung der Kuppelpartner selbsttätig zurücksetzt.

Das Freilaufglied weist bevorzugt eine freie Wegstrecke auf, innerhalb welcher eine Relativbewegung eines der Kuppelpartner ermöglicht ist. Wird nunmehr eine Lastflussumkehr zwischen den Kuppelpartnern genutzt, um das Freilaufglied selbsttätig zurückzustellen, so kann beispielsweise mit einem Entkuppeln der ersten Überholkupplung ein entkuppelter Kupplungspartner eine Rückstellung des Freilaufgliedes vornehmen. Dazu kann beispielsweise die in einem Verzehrelement gespeicherte Energie genutzt werden. Bei einer Entlastung des Freilaufgliedes kann eine im Verzehrelement gespeicherte Energie genutzt werden, um eine Rückstellung des Freilaufgliedes zu bewirken.

Es kann weiterhin vorteilhaft vorgesehen sein, dass eine Entfernung des Kuppelpartners von dem ersten Begrenzungsanschlag gegen eine Rückstellkraft erfolgt.

Ein Kuppelpartner kann relativ zu einem ersten Begrenzungsanschlag fixiert sein. Dies ist insbesondere dann vorsehbar, wenn der Lastfluss an der ersten Überholkupplung derart gerichtet ist, dass eine Entkupplung vorliegt. Mit einem Einkuppeln der Kuppelpartner kann ein Entfernen des Kuppelpartners von dem erstem Begrenzungsanschlag erfolgen. Dazu wird der Kuppelpartner von dem ersten Begrenzungsanschlag in eine freie Wegstrecke hineinbewegt. Die dabei auftretende Energie kann zwischengespeichert werden, um ein Rückstellen des Kuppelpartners zu dem ersten Begrenzungselement zu unterstützen. So kann die Energie beispielsweise durch ein Federelement zwischengespeichert werden, welches bei einem Einkuppeln der Kuppelpartner der ersten Überholkupplung gespannt wird.

Weiter kann vorteilhaft vorgesehen sein, dass das Freilaufglied eine Entlastung von Kuppelkräften an der zweiten Überholkupplung bewirkt.

Durch das Freilaufglied an der ersten Überholkupplung kann eine Entlastung der zweiten Überholkupplung von Kuppelkräften bewirkt werden. So kann beispielsweise bei einen Einkuppeln der Kuppelpartner der zweiten Überholkupplung auf Grund einer Lastflussumkehr ein Blockieren der dortigen Kupplungspartner erfolgen. Durch das Wirksamwerden des Freilaufelementes an der ersten Überholkupplung können Blockierkräfte an der zweiten Überholkupplung durch eine Freilaufbewegung des Freilaufglieds an der ersten Überholkupplung entspannt werden. Damit ist die Vorrichtung von unerwünschten Blockierkräften freigehalten. Weiterhin sind Einkuppelmomente durch das Freilaufglied neutralisiert.

Eine weitere vorteilhafte Ausgestaltung kann vorsehen, dass die Vorrichtung einen Federspeicher aufweist.

Ein Federspeicher ist ein Energiespeicher, welcher durch Federspannarbeit eine Aufladung erfährt. Die Vorrichtung mit der Getriebeanordnung kann dazu dienen, den Federspeicher aufzuladen. Beispielsweise kann dazu die Getriebeanordnung eine so genannten Federspannwelle treiben, welche mit einer Kurbel ausgestattet ist, an der ein Pleul sitzt und welche einer Drehbewegung der Kurbel in eine Linearbewegung wandelt und so eine Aufladung einer Speicherfeder des Federspeichers vollzieht. Auf Grund der Konstruktion treten an der Kurbel dabei Totpunkte auf, welche mit einem Überschreiten zu einem Lastflusswechsel an der Spannwelle und daran gekuppelten Elemente der Getriebeanordnung bewirken. Mit Überschreiten eines Totpunktes kann die Spannwelle von einer nunmehr gespannten Speicherfeder getrieben werden, wodurch ein Lastflusswechsel an der ersten sowie der zweiten Überholkupplung der Getriebeanordnung auftreten kann.

Bevorzugt kann kurz nach Passieren eines Totpunktes ein Verklinken des Federspeichers erfolgen, so dass die Speicherfeder im geladenen Zustand verbleibt und ein spontanes Entladen verhindert ist. Mit einem Verklinken kann es zu einem Prellen (Rückbewegung) der Spannwelle kommen, wobei die zum Spannen der Speicherfeder eingesetzte Getriebeanordnung eine geringe Rückbewegung vollzieht, die gegebenenfalls durch die Übersetzung der Getriebeanordnung noch verstärkt wird. Durch diese Rückbewegung kann es zu einem Einkuppeln von Kupplungspartnern insbesondere der zweiten Überholkupplung kommen, wodurch ein Lastflusswechsel auch an der ersten Überholkupplung auftreten kann. Die bisher freilaufende erste Überholkupplung wird durch Lastflussumkehr eingekuppelt, wobei das Einkuppeln durch das Freilaufglied zunächst neutralisiert wird. Dadurch wird trotz eingekuppelter erster und zweiter Überholkupplung eine begrenzte Bewegungsmöglichkeit der in der zweiten Überholkupplung gelagerten Welle geschaffen, welche Blockierkräfte der Kuppelpartner insbesondere der zweiten Überholkupplung entspannen kann.

Eine weitere vorteilhafte Ausgestaltung kann vorsehen, dass die Getriebeanordnung Teil eines Federspeicherantriebes ist.

Ein Federspeicherantrieb ist ein Antrieb, welcher eine Bewegung abgeben kann. Zum Abgeben einer Bewegung wird zunächst eine Speicherfeder eines Federspeichers aufgeladen, welche mittels einer Verklinkungseinrichtung im aufgeladenen Zustand blockiert wird. Mit Freigabe der Verklinkungseinrichtung kann sich die Speicherfeder entspannen, wodurch eine Bewegung durch den Federspeicherantrieb abgegeben wird. Bereits mit dem Entspannen der Federspeicher kann aufgrund der Überholkupplung ein Nachspannen der Speicherfeder erfolgen, wodurch ein erneutes Aufladen der Speicherfeder vorgenommen wird.

Eine weitere vorteilhafte Ausgestaltung kann vorsehen, dass die Vorrichtung ein elektrisches Schaltgerät aufweist.

Ein elektrisches Schaltgerät dient dem Schalten eines Strompfades, d. h. ein Strompfad wird unterbrochen bzw. ein Strompfad wird geschlossen. Dabei kann das elektrische Schaltgerät beispielsweise relativ zueinander bewegbare Schaltkontaktstücke aufweisen, zwischen welchen eine Schaltstrecke gebildet ist. Zur Erzeugung einer Relativbewegung zwischen den Schaltkontaktstücken des elektrischen Schaltgerätes kann der Federspeicherantrieb bzw. eine in der Speicherfeder des Federspeichers zwischengespeicherte Energie verwendet werden. Dies weist den Vorteil auf, dass besonders schnelle Schalthandlungen durch den Federspeicherantrieb realisiert werden können, wohingegen ein Nachladen bzw. ein Aufladen der Speicherfeder des Federspeicherantriebes während eines längeren Zeitraumes vorgenommen werden kann. Bei entsprechender Auslegung der Speicherfeder kann die Speicherfeder mehrere Bewegungszyklen der relativ zueinander bewegbaren Schaltkontaktstücke treiben. So können die Schaltkontaktstücke beispielsweise eine erneute Ausschaltung, eine Einschaltung sowie eine Ausschaltung mit ein und derselben geladenen Speicherfeder vollziehen, wobei ein Nachladen der Speicherfeder nicht notwendig ist.

Ein Ausführungsbeispiel der Erfindung ist schematisch in einer Zeichnung gezeigt und nachfolgend näher beschrieben.

Dabei zeigt die
- Figur 1: eine Vorrichtung mit einer ersten Überholkupplung im Ruhezustand; die
- Figur 2: ein Detail der Figur 1; die
- Figur 3: die aus der Figur 1 bekannte Vorrichtung während eines Betriebes der Getriebeanordnung; die
- Figur 4: ein Detail der Figur 3; die
- Figur 5: die aus der Figur 1 bekannte Vorrichtung in einem gespannten (verklinktem) Zustand; die
- Figur 6: ein Detail der Figur 5; die
- Figur 7: die aus der Figur 1 bekannte Vorrichtung kurz nach einem Entklinken und die
- Figur 8: ein Detail der Figur 7.

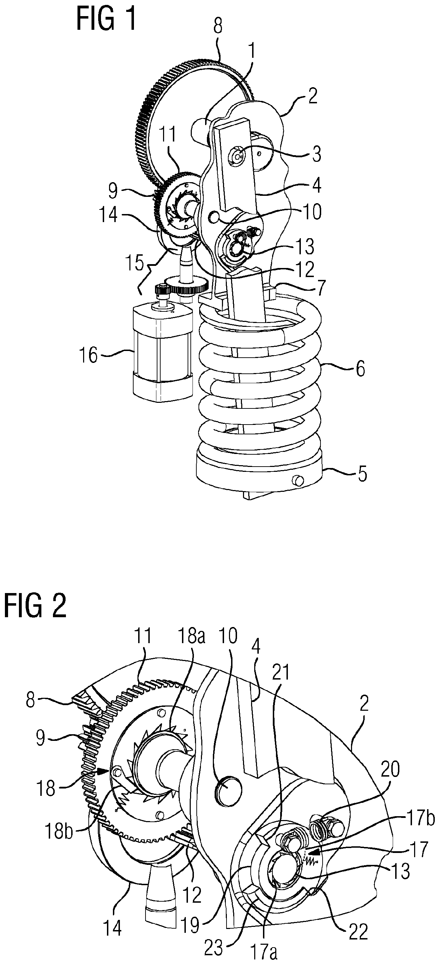

Die Figur 1 zeigt eine Vorrichtung mit einer Getriebeanordnung, welche eine Spannwelle 1 aufweist. Die Spannwelle 1 ist in einem Getriebegehäuse 2 drehbar gelagert. Das Getriebegehäuse 2 ist aus Gründen der Übersichtlichkeit freigeschnitten dargestellt. Die Spannwelle 1 selbst ist im Getriebegehäuse 2 derart drehbar gelagert, dass sowohl eine Drehbewegung frei im Uhrzeigersinn als auch entgegen des Uhrzeigersinns möglich ist. Die Spannwelle 1 ist weiter mit einem Kurbelarm 3 ausgestattet. An dem Kurbelarm 3 ist ein Pleuel 4 angeschlagen. Das Pleuel 4 weist einen Pleuelanschlag 5 auf. Am Pleuelanschlag 5 liegt eine Speicherfeder 6 an. Vorliegend handelt es sich bei der Speicherfeder 6 um eine Schraubenfeder, welche von dem Pleuel 4 durchsetzt ist. Der Pleuelanschlag 5 liegt an einem stirnseitigen Ende der Speicherfeder 6 an. Mit dem anderen entgegengesetzt liegenden, stirnseitigen Ende der Speicherfeder 6, liegt die Speicherfeder 6 an einem Aufnahmeteller 7 an. Der Aufnahmeteller 7 ist vorliegend als Teil des Getriebegehäuses 2 ausgeformt. Bei einer Rotation der Spannwelle 1 wird das Pleuel 4 mitgenommen. Die Speicherfeder 6 ist zwischen dem Pleuelanschlag 5 sowie dem Aufnahmeteller 7 des Getriebegehäuses 2 eingespannt. Bei einer Rotation der Spannwelle 1 vollzieht der Kurbelarm 3 einen Hub, wodurch auf Grund der Verbindung des Pleuelanschlages 5 mit dem Pleuel 4 die Distanz zwischen dem Aufnahmeteller 7 sowie dem Pleuelanschlag 5 reduziert wird. Somit ist ein Spannen der Speicherfeder 6 durch eine Rotation der Spannwelle 1 ermöglicht. Weiterhin ist eine Bewegung der Spannwelle 1, getrieben durch ein Entspannen der gespannten Speicherfeder 6, möglich. Der Ablauf eines Spannens und Entspannens der Speicherfeder 6 wird anhand der Figuren 1 bis 8 weiter unten beschrieben.

Auf der Spannwelle 1 ist ein Spannwellenzahnrad 8 angeordnet. Das Spannwellenzahnrad 8 weist eine Verzahnung auf, so dass eine Rotation auf die Spannwelle 1 eingekoppelt werden kann bzw. eine Rotation von der Spannwelle 1 ausgekoppelt werden kann. Das Spannwellenzahnrad 8 kämmt ein Ritzel 9 einer ersten Getriebewelle 10. Die erste Getriebewelle 10 ist im Wesentlichen parallel zur Spannwelle 1 ausgerichtet, wobei auf Grund der Verbindung von Ritzel 9 sowie Spannwellenzahnrad 8 eine Rotation der Spannwelle 1 sowie der ersten Getriebewelle 10 mit entgegen gesetztem Richtungssinn erfolgt. Die erste Getriebewelle 10 selbst ist frei drehbar in dem Getriebegehäuse 2 gelagert. Auf der ersten Getriebewelle 10 ist ein erstes Zahnrad 11 aufgesetzt. Das erste Zahnrad 11 steht wiederum in Verbindung mit einem zweiten Ritzel 12 einer zweiten Getriebewelle 13. Die zweite Getriebewelle 13 ist drehbar gelagert und im Wesentlichen parallel zur ersten Getriebewelle 10 sowie zur Spannwelle 1 ausgerichtet. An der zweiten Getriebewelle 13 ist ein Kegelzahnrad 14 angeordnet, welches über ein Vorgetriebe 15 mit einem Elektromotor 16 in Verbindung steht. Der Elektromotor 16 wird über eine elektrische Schaltung angesteuert und kann elektrische Energie in mechanische Energie wandeln. Eine vom Elektromotor 16 abgegebene Drehbewegung wird über das Vorgetriebe 15 untersetzt und auf das Kegelzahnrad 14 übertragen. Das Kegelzahnrad 14 kann so in Rotation versetzt werden, wodurch sich die zweite Getriebewelle 13 dreht. Über das zweite Ritzel 12 der zweiten Getriebewelle 13 kann eine Rotation auf das erste Zahnrad 11 übertragen werden, wodurch eine Drehbewegung auf die erste Getriebewelle 10 übertragbar ist. Diese wiederum kann eine Drehbewegung auf das erste Ritzel 9 übertragen und diese Drehbewegung des ersten Ritzels 9 kann auf das Spannwellenzahnrad 8 sowie die Spannwelle 1 nebst Kurbelarm 3 übertragen werden.

Eine Verbindung des ersten Zahnrades 11 mit der ersten Getriebewelle 10 erfolgt über eine zweite Überholkupplung 18. Die Lagerung der zweiten Getriebewelle 13 im Getriebegehäuse 2 ist über eine erste Überholkupplung 17 vorgenommen. Anhand des Ausschnittes in der Figur 2 sollen im Folgenden Aufbau und Wirkungsweise der ersten Überholkupplung 17 sowie der zweiten Überholkupplung 18 näher beschrieben werden. Die zweite Überholkupplung 18 weist einen ersten Kuppelpartner 18a auf, welcher winkelstarr mit der ersten Getriebewelle 10 verbunden ist. Beispielhaft eine Funktion einer Überholkupplung symbolisierend ist der erste Kuppelpartner 18a nach Art einer verkippten Verzahnung ausgeführt, welche in Umfangsrichtung der ersten Getriebewelle 10 verläuft. Der erste Kuppelpartner 18a ist winkelstarr mit der ersten Getriebewelle 10 verbunden. Die erste Getriebewelle 10 kann selbst als erster Kuppelpartner 18a interpretiert werden. Als zweiten Kuppelpartner 18b ist eine federbelastete Klinke mit dem ersten Zahnrad 11 verbunden. Das erste Zahnrad 11 kann selbst als zweiter Kuppelpartner 18b interpretiert werden. Das erste Zahnrad 11 und die erste Getriebewelle 10 sind so in Abhängigkeit einer Lastflussrichtung/Lastflussänderung zwischen dem ersten Zahnrad 11 sowie der ersten Getriebewelle 10 eingekuppelt bzw. ausgekuppelt. Bei einer Lastflussänderung zwischen den Kuppelpartnern 18a, 18b erfolgt ein Ein- bzw. Auskuppeln von erstem Kuppelpartner 18a sowie zweitem Kuppelpartner 18b der zweiten Überholkupplung 18. Dadurch ist die Möglichkeit gegeben, einen Kraftfluss in einer erwünschten Übertragungsrichtung, beispielsweise von dem ersten Zahnrad 11 über die zweite Überholkupplung 18 auf die erste Getriebewelle 10 zu übertragen. Dies kann beispielsweise dann von Interesse sein, um mittels des treibenden Elektromotors eine Drehbewegung, ausgehend von dem Vorgetriebe 15 über die zweite Getriebewelle 13, das zweite Ritzel 12, das erste Zahnrad 11, die zweite Überholkupplung 18 auf die erste Getriebewelle 10 und von dort über das erste Ritzel 9 und das Spannwellenzahnrad 8 auf die Spannwelle 1 zu übertragen.

Zur Lagerung der zweiten Getriebewelle 13 in dem Getriebegehäuse 2 ist die erste Überholkupplung 17 vorgesehen. Die erste Überholkupplung 17 dient einer drehbeweglichen Positionierung der zweiten Getriebewelle 13, wobei in Abhängigkeit einer des Drehsinns der zweiten Getriebewelle 13 ein Blockieren einer Drehbewegung der zweiten Getriebewelle 13 erfolgt bzw. eine Drehbewegung der zweiten Getriebewelle 13 mit umgekehrtem Drehsinn zugelassen wird.

Die erste Überholkupplung 17 ist gleichartig wie die zweite Überholkupplung 18 aufgebaut. Ein erster Kuppelpartner 17a ist in Form einer in Umfangsrichtung um die Drehachse der zweiten Getriebewelle 13 verlaufenden sägezahnartigen Profilierung ausgebildet, wobei der erste Kuppelpartner 17a der ersten Überholkupplung winkelstarr mit der zweiten Getriebewelle 13 verbunden ist. Die zweite Getriebewelle 13 kann als erster Kuppelpartner 17a interpretiert werden. Der zweite Kuppelpartner 17b der ersten Überholkupplung 17 ist in Form einer Klinke ausgeführt, welche federbelastet gegen den ersten Kuppelpartner 17a gepresst ist. Der zweite Kuppelpartner 17b der ersten Überholkupplung 17 seinerseits ist ortsfest in einer Buchse 19 gelagert. Die Buchse 19 kann als zweiter Kuppelpartner 17b der ersten Überholkupplung 17 interpretiert werden. Die Buchse 19 ihrerseits ist begrenzt drehbeweglich in dem Getriebegehäuse 2 gelagert. Bei einer Drehbewegung der zweiten Getriebewelle 13 mit einem ersten Richtungssinn erfolgt ein Entkuppeln der Kuppelpartner 17a, 17b und ein freies Rotieren der zweiten Getriebewelle 13 ist möglich. Bei einer Umkehr des Drehrichtungssinnes, d. h. bei einer Umkehr des Lastflusses an der zweiten Getriebewelle 13 erfolgt ein Einkuppeln der Kuppelpartner 17a, 17b der ersten Überholkupplung 17, wodurch ein winkelstarrer Verbund zwischen den beiden Kuppelpartnern 17a, 17b der ersten Überholkupplung 17 erzwungen wird, wodurch auf Grund der drehbeweglichen Lagerung der Buchse 19 dieselbe relativ zum Getriebegehäuse in demselben begrenzt drehbeweglich bewegt werden kann.

Eine derartige begrenzte Drehbewegung erfolgt gegen die Kraft einer Rückstellfeder 20, welche einerseits am Getriebegehäuse 2 gelagert ist und andererseits mit der Buchse 19 verbunden ist. Angetrieben durch eine Drehbewegung der zweiten Getriebewelle 13, über eingekuppelte Kuppelpartner 17a, 17b der ersten Überholkupplung 17 erfolgt eine begrenzte Drehbewegung der Buchse 19 im Getriebegehäuse 2, so dass die Endpunkte der Rückstellfeder 20 voneinander entfernt werden. Die Rückstellfeder 20 wird gespannt. Vorliegend ist vorgesehen, dass als Endpunkte im Wesentlichen parallel zur Drehachse der zweiten Getriebewelle 13 ausgerichtete Bolzen genutzt sind, welche einerseits am Getriebegehäuse 2 und andererseits an der Buchse 19 befestigt sind.

Mit zunehmender Verdrehung der Buchse 19, getrieben durch eine Drehbewegung der zweiten Getriebewelle 13, bei eingekuppelten Kuppelpartnern 17a, 17b der ersten Überholkupplung 17 wird ein Spannen der Rückstellfeder 20 vorgenommen, wodurch mit zunehmender Spannung der Rückstellfeder 20 auch ein erhöhter Widerstand erzeugt wird, so dass eine derartige Bewegung durch die Rückstellfeder 20 abgebremst wird. Über die Rückstellfeder 20 ist eine elastische Verbindung des zweiten Kuppelpartners 17b der ersten Überholkupplung 17 mit dem Getriebegehäuse 2 gegeben. Die drehbeweglich gelagerte Buchse 19 bildet ein Freilaufglied für die erste Überholkupplung 17 aus, wobei dieses Freilaufglied bei einem Einkuppeln der Kuppelpartner 17a, 17b der ersten Überholkupplung 17 deren Sperrwirkung vorübergehend neutralisiert.

Die Buchse 19 weist einen ersten Anschlag 21 sowie einen zweiten Anschlag 22 auf. Die beiden Anschläge 21, 22 an der Buchse 19 sind über die winkelstarre Verbindung des zweiten Kuppelpartners 18b mit der Buchse 19 mit einem der Kuppelpartner, insbesondere mit dem zweiten Kuppelpartner 17b, verbunden. Die Anschläge 21, 22 interagieren mit einer Anformung 23 am Getriebegehäuse 2. Somit ist der Buchse 19 eine begrenzte Drehbewegung ermöglicht, welche ca. einem Dreiviertel einer Volldrehung entspricht. Gegebenenfalls kann durch Variation der Positionen der Anschläge 21, 22 der Buchse 19 bzw. der Anformung 23 der zu überstreifende Winkelbereich einer Drehbewegung der Buchse 19 vergrößert oder verkleinert werden. Durch Bestimmung des freien Winkelbereiches ist die freie Wegstrecke des Freilaufgliedes festgelegt.

Beispielhaft ist in den Figuren 1 bis 8 die Ausführung der Überholkupplungen 17, 18 als Sperrklinkenfreilauf ausgeführt. Neben der Nutzung einer Sperrklinke zur Realisierung einer Überholkupplung können auch weitere Freiläufe, beispielsweise basierend auf Klemmrollen, Klemmkörpern, Sperrklinken, Zahnscheiben, Schlingfedern usw. zum Einsatz kommen. Unabhängig von der Ausgestaltung der jeweiligen Überholkupplungen 17, 18 ist deren Sperr- bzw. Freilauffunktion bei einem Lastwechsel jedoch gleich.

Im Folgenden soll anhand der Abfolge der Figuren 1, 2, 3, 4, 5, 6, 7 und 8 ein Arbeitsvorgang der erfindungsgemäßen Vorrichtung mit Getriebeanordnung beschrieben werden.

Die Figur 1 zeigt einen teilweise gespannten Zustand der Speicherfeder 6. Die Speicherfeder 6 ist eingesetzt, um eine Energie zu speichern und diese bedarfsweise, beispielsweise schlagartig, freizugeben. Somit ist die Möglichkeit gegeben, durch einfache mechanische Konstruktionen, beispielsweise im Notfall, einen ausreichenden Energievorrat bereitzustellen, um eine Bewegung zu initiieren. Bevorzugt kann dazu beispielsweise vorgesehen sein, dass die Vorrichtung mit der Getriebeanordnung ein elektrisches Schaltgerät aufweist, welches relativ zueinander bewegbare Schaltkontaktstücke aufweist. Die Schaltkontaktstücke sind dabei zum Herstellen eines Strompfades bzw. zum Unterbrechen eines Strompfades relativ zueinander bewegbar. Eine Kraft zum Erzeugen der Relativbewegung kann in der Speicherfeder 6 zwischengespeichert und bedarfsweise dieser Speicherfeder 6 entnommen werden. Dies weist den Vorteil auf, dass beispielsweise auch bei Störungen innerhalb eines Elektroenergiesystems (Elektromotor 16 arbeitet beispielsweise nicht mehr) die Speicherfeder 6 im gespannten Zustand ausreichende Energie zur Verfügung stellen kann, um eine Relativbewegung der Schaltkontaktstücke zu erzeugen. Darüber hinaus weist die Speicherfeder 6 den Vorteil auf, dass ein "Aufladen" der Speicherfeder 6 während vergleichsweise langer Zeiträume erfolgen kann, wobei ein "Entladen" der Speicherfeder 6 beispielsweise auch schlagartig geschehen kann, so dass beispielsweise auch ein sehr rasches Entfernen bzw. Annähern relativ zueinander bewegbarer Schaltkontaktstücke mit der erfindungsgemäßen Vorrichtung erzielt werden kann.

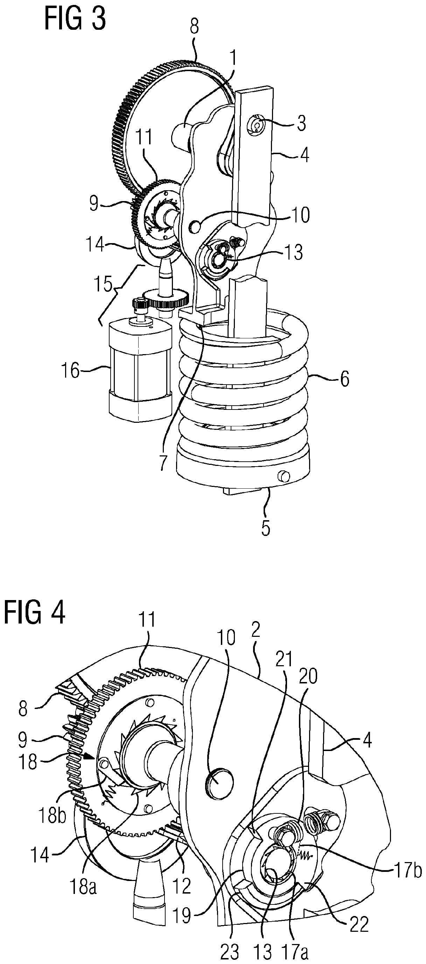

Ausgehend vom entspannten Zustand der Speicherfeder 6 wird zunächst der Elektromotor 16 angesteuert, so dass dieser elektrische Energie in eine Drehbewegung wandelt. Über das Vorgetriebe 15 erfolgt eine Drehbewegung des Kegelzahnrads 14 sowie der zweiten Getriebewelle 13, so dass diese sich im Uhrzeigersinn dreht (Uhrzeigersinn mit Bezug auf die stirnseitige Blickrichtung, wie sie in den Figuren 1, 2, 3, 4, 5, 6, 7 und 8 dargestellt ist). In diesem Zustand tritt ein Lastfluss an der ersten Überholkupplung 17 derart auf, dass die beiden Kuppelpartner 17a, 17b der ersten Überholkupplung 18 im Freilauf befindlich sind. Die Buchse 19 ist in ihrer Ruhestellung befindlich und wird in ihrer Ruhelage durch die Rückstellfeder 20 gesichert mit dem zweiten Anschlag 22 gegen die Anformung 23 gepresst. Eine Drehbewegung der zweiten Getriebewelle 13 im Uhrzeigersinn wird über das zweite Ritzel 12 auf das erste Zahnrad 11 übertragen. Auf Grund der Koppelung von zweitem Ritzel 12 und erstem Zahnrad 11 erfolgt eine Umkehr des Drehsinns am ersten Zahnrad 11. In Folge des Drehsinns bzw. des Lastflusses von der zweiten Getriebewelle 13 zu der ersten Getriebewelle 10 erfolgt ein Einkuppeln der Kuppelpartner 18a, 18b der zweiten Überholkupplung 18, wodurch die Drehbewegung 11, getrieben durch den Elektromotor 16, auch auf die erste Getriebewelle 10 übertragen wird. Die erste Getriebewelle 10 dreht sich entsprechend analog zum ersten Zahnrad 11 entgegengesetzt zum Uhrzeigersinn. Mit der Drehbewegung der ersten Getriebewelle 10 erfolgt auch eine Drehbewegung des ersten Ritzels 9, wobei dieses die Drehbewegung auf das Spannwellenzahnrad 8 überträgt, wobei hier wiederum eine Umkehr des Drehsinns erfolgt, so dass sich das Spannwellenzahnrad 8 sowie die Spannwelle 1 im Uhrzeigersinn dreht. D. h. ausgehend von der in der Figur 1 gezeigten Lage des Kurbelarmes 11 wird dieser in Richtung des Uhrzeigersinns geschwenkt. Das Pleuel 4 bewegt den Pleuelanschlag 5 in Richtung des Aufnahmetellers 7, wodurch eine Kompression der Speicherfeder 6 vorgenommen wird. Diese Bewegung erfolgt, angetrieben durch den Elektromotor 16, so lange, bis ein oberer Totpunkt des Kurbelarmes 3 an der Spannwelle 1 erreicht wird. In Figur 3 hat die Speicherfeder 6 ihren gespannten Zustand erreicht und ein Durchschwenken des Kurbelarmes 3 durch den oberen Totpunkt steht unmittelbar bevor. Mit Erreichen bzw. kurz nach Erreichen des oberen Totpunktes erfolgt ein Absteuern des Elektromotors 16, d. h. ein weiteres Treiben der Spannwelle 1 durch den Elektromotor 16 ist nicht mehr notwendig. Nach Passieren des oberen Totpunktes versucht die gespannte Speicherfeder 6 eine Lastflussumkehr an der Spannwelle 1 zu bewirken. Um ein unerwünschtes weiteres Entladen der Speicherfeder 6 zu verhindern, läuft die Drehbewegung der Spannwelle 1 bzw. des Kurbelarmes 3 gegen einen Verklinkungsmechanismus (in den Figuren nicht dargestellt). Der Verklinkungsmechanismus blockiert eine weitere Drehbewegung der Spannwelle 1 kurz nach einem Passieren des oberen Totpunktes des Kurbelarmes 3. Dabei handelt es sich hier um eine Bewegung von wenigen Grad. Mit einem Passieren des oberen Totpunktes und dem Anschlagen der Spannwelle 1 bzw. des Kurbelarmes 3 gegen den Verklinkungsmechanismus erfolgt eine Lastflussumkehr in der Getriebeanordnung. Die Spannwelle 1 treibt nun (Elektromotor 16 ist ausgeschaltet) das Spannwellenzahnrad 8 im Uhrzeigersinn. Über das Ritzel 9 wird diese Drehbewegung auch auf die erste Getriebewelle 10 übertragen. Die erste Getriebewelle 10 bewegt sich entgegengesetzt dem Uhrzeigersinn, wobei auf Grund der nicht mehr vorhandenen Antriebsbewegung des Elektromotors die (Winkel) Geschwindigkeit der ersten Getriebewelle 10 größer ist als die (Winkel) Geschwindigkeit des dort aufsitzenden ersten Zahnrades 11. Folglich kommt es zu einem Überholen und Entkuppeln der zweiten Überholkupplung 18, wodurch eine Bewegung, getrieben durch eine Entspannung der Speicherfeder 6, nicht weiter bis zu dem ersten Zahnrad 11 bzw. der zweiten Getriebewelle 13 durchschlagen kann.

Bei einem Anschlagen der Spannwelle 1 gegen eine Klinke kann es zu elastischen Verformungen im Verklinkungsmechanismus kommen. Nach einem Anschlagen und Komprimieren des Verklinkungsmechanismus erfolgt ein Rückprellen des Verklinkungsmechanismus. Die Drehbewegung an der Spannwelle 1 wird so umgekehrt. Mit anderen Worten, unmittelbar nach Passieren des oberen Totpunktes läuft die Spannwelle gegen eine Sperre. Für einige wenige Grade wird bis zum Anschlagen an dem Verklinkungsmechanismus ein Treiben der Getriebeanordnung durch die Speicherfeder 6 im Kauf genommen. Eine derartige treibende Bewegung durch die Speicherfeder 6 wird durch die zweite Überholkupplung 18 von dem Elektromotor bzw. von der zweiten Getriebewelle 13 entkuppelt. Mit einem Anschlagen an den Verklinkungsmechanismus kann es dort zu einem elastischen Verformen kommen, wodurch nach einem Rückschwingen des Kurbelarms 3 (Umkehr der elastischen Verformung) und eine Umkehr der Drehbewegung der Spannwelle 1 auftritt.

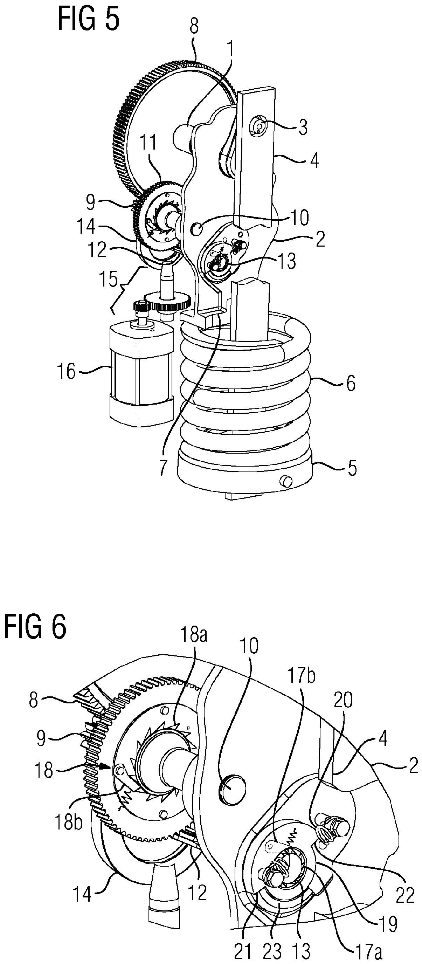

Bei einer Umkehr der Drehbewegung an der Spannwelle 1 (Bewegungsablauf von Figuren 3, 4 zu Figuren 5, 6) wird der Kurbelarm 3 zunächst um einige wenige Grade oder Zehntelgrade in Richtung des oberen Totpunktes zurückschwingen. D. h. die Spannwelle 1 bewegt sich nunmehr mit entgegen gesetztem Drehsinn. Die Spannwelle 1 sowie das daran befestigte Spannwellenzahnrad 8 geben die Drehbewegung entgegen des Uhrzeigersinns auf das Ritzel 9 der ersten Getriebewelle 10 weiter. Auf Grund der auftretenden Lastflussumkehr kommt es zu einem Einkuppeln der zweiten Überholkupplung 18. Die eingekuppelte zweite Überholkupplung 18 überträgt die Bewegung der ersten Getriebewelle 10 auch auf das erste Zahnrad 11, welches eine Bewegung wiederum auf das zweite Ritzel 12 überträgt, so dass sich die zweite Getriebewelle 13 entgegengesetzt zum Uhrzeigersinn bewegt. Nunmehr kommt es auch zu einem Einkuppeln der ersten Überholkupplung 17. D. h. die erste Überholkupplung 17 blockiert. Auf Grund der winkelstarren Verbindung des zweiten Kuppelpartners 17b mit der drehbeweglich im Getriebegehäuse 2 gelagerten Buchse 19 kann diese Drehbewegung trotz eingekuppelter und blockierender erster Überholkupplung 17 begrenzt vollzogen werden. Die Wirkung der eingekuppelten Kuppelpartner 17a, 17b der ersten Überholkupplung 17 wird durch das Freilaufglied neutralisiert. Bei dieser Drehbewegung kommt es nunmehr zu einem Spannen der Rückstellfeder 20. Die Rückstellfeder 20 wird gespannt, und zwar so lange, bis der erste Anschlag 21 mit der Anformung 23 in Kontakt (Fig. 6) tritt. Bis zu einem Anschlagen des ersten Anschlages 21 an der Anformung 23 ist eine Neutralisation der eingekuppelten Kuppelpartner 17a, 17b der ersten Überholkupplung 17 gegeben. Mit einem Anschlagen des ersten Anschlages 21 der Buchse 19 an der Anformung 23 ist die blockierende Wirkung der ersten Überholkupplung stoßartig gegeben, so dass eine weitere Drehbewegung der zweiten Getriebewelle 13 entgegengesetzt dem Uhrzeigersinn blockiert ist.

Vorliegend ist eine derartige Rückbewegung zugelassen, um ein Blockieren der zweiten Überholkupplung 18, ausgelöst durch eine Lastflussumkehr, zu lösen. Die Kuppelwirkung der ersten Überholkupplung 17 wird zu Beginn einer Drehbewegung der zweiten Getriebewelle 13 neutralisiert und eine begrenzte Drehbewegung der Buchse 19 in dem Getriebegehäuse 2 zugelassen. Damit ist es möglich, Blockierungen der zweiten Überholkupplung 18 zu lösen. Ein Verkeilen bzw. Verklemmen der zweiten Überholkupplung 18 durch ein unerwünschtes Rückschwingen der Spannwelle 1 ist verhindert.

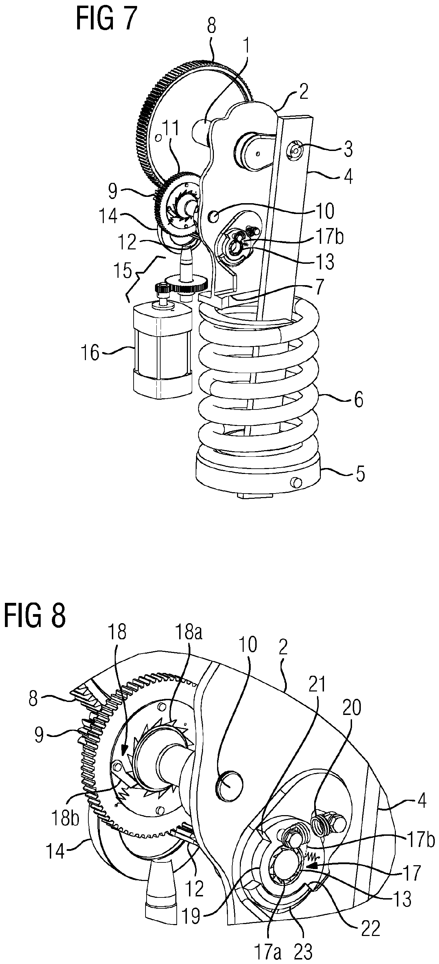

Mit einem Anschlagen der Spannwelle 1 gegen einen Verklinkungsmechanismus verbleibt die Spannfeder 6 im gespannten Zustand. Nunmehr besteht die Möglichkeit, den Verklinkungsmechanismus zu lösen und ein Entspannen der gespannten Speicherfeder 6 vorzunehmen. Nunmehr treibt die gespannte Speicherfeder 6 eine Rotation des Kurbelarmes 3 im Uhrzeigersinn, so dass auch die Spannwelle 1 sowie das daran befindliche Spannwellenzahnrad 8 im Uhrzeigersinn bewegt wird (von Figur 5, 6 zu Figur 7, 8). Diese Bewegung im Uhrzeigersinn wird auch über das erste Ritzel 9 auf die erste Getriebewelle 10 übertragen. Die erste Getriebewelle 10 wiederum bewegt den ersten Kuppelpartner 18a entgegengesetzt zum Uhrzeigersinn, woraufhin der zweite Kuppelpartner 18b, auskuppelt (Freilauffunktion). Das erste Zahnrad 11 verbleibt in einer Ruhelage. In Folge dessen kann, getrieben durch die Rückstellkraft der Rückstellfeder 20, ein Einkuppeln der Kuppelpartner 17a, 17b der ersten Überholkupplung 17 erfolgen. Die Rückstellfeder 20 treibt über die eingekuppelte erste Überholkupplung 17 die zweite Getriebewelle 13 im Uhrzeigersinn. Über das zweite Ritzel 12 wird eine Bewegung auch auf das erste Zahnrad 11 übertragen. Das erste Zahnrad 11 wird entgegen dem Uhrzeigersinn gedreht. Dabei ist die Winkelgeschwindigkeit des ersten Zahnrades 11 geringer als die Winkelgeschwindigkeit der ersten Getriebewelle 10, so dass die zweite Überholkupplung 18 auskuppelt. Die voneinander abweichenden Winkelgeschwindigkeiten der ersten Getriebewelle 10 sowie des ersten Zahnrades 11 sind durch die voneinander abweichenden Dimensionierungen der Rückstellfeder 20 und der Speicherfeder 6 bestimmt. Die Buchse 19 wird in ihre Ruhestellung (vgl. Bewegung von Figuren 5, 6 nach Figuren 7, 8) zurückbewegt, so dass das Freilaufglied für einen weiteren Bewegungszyklus, d. h. ein Nachspannen der Speicherfeder 6 bzw. ein erneutes vollständiges Spannen der Speicherfeder 6, zur Verfügung steht.

## Patentansprüche

1. Vorrichtung, aufweisend eine Getriebeanordnung mit einer ersten Überholkupplung (17), insbesondere zur Übertragung eines Drehmomentes, welche einen ersten Kuppelpartner (17a) und einen zweiten Kuppelpartner (17b) aufweist, die in Abhängigkeit einer Lastflussänderung zwischen den Kuppelpartnern (17a, 17b) einkuppeln oder auskuppeln, wobei
der ersten Überholkupplung (17) ein Freilaufglied (19) zugeordnet ist, welches ein Einkuppeln der Kuppelpartner (17a, 17b), insbesondere zeitweise, neutralisiert,
**dadurch gekennzeichnet, dass**
über das Freilaufglied (19) eine elastische Verbindung eines Kuppelpartners (17a, 17b) mit einem weiteren Getriebeelement (2) gebildet ist.

2. Vorrichtung, aufweisend eine Getriebeanordnung nach Anspruch 1,
**dadurch gekennzeichnet, dass**
das Freilaufglied (19) eine freilaufende Wegstrecke aufweist, welche größer ist als eine nötige Wegstrecke einer Einkuppelbewegung zum Einkuppeln der Kuppelpartner (17a, 17b).

3. Vorrichtung, aufweisend eine Getriebeanordnung nach Anspruch 1 oder Anspruch 2,
**dadurch gekennzeichnet,dass**
einer der Kuppelpartner (17a, 17b) mit einem ersten Anschlag (21, 22) verbunden ist.

4. Vorrichtung, aufweisend eine Getriebeanordnung nach einem der Ansprüche 1 bis 3,
**dadurch gekennzeichnet, dass**
die erste Überholkupplung (17) ein Lager für eine Welle (13) bildet.

5. Vorrichtung, aufweisend eine Getriebeanordnung nach Anspruch 4,
**dadurch gekennzeichnet, dass**
an die Welle (13) eine zweite Überholkupplung (18) angekoppelt ist.

6. Vorrichtung, aufweisend eine Getriebeanordnung nach Anspruch 4 oder 5,
**dadurch gekennzeichnet, dass**
die erste und die zweite Überholkupplung (17, 18) gleichsinnige Sperrwirkungen aufweisen.

7. Vorrichtung, aufweisend eine Getriebeanordnung nach einem der Ansprüche 1 bis 6,
**dadurch gekennzeichnet, dass**
das Freilaufglied (19) eine Bewegung eines der Kuppelpartner (17a, 17b), insbesondere im eingekuppelten Zustand relativ zu einem Begrenzungsanschlag (23) ermöglicht.

8. Vorrichtung, aufweisend eine Getriebeanordnung nach einem der Ansprüche 1 bis 7,
**dadurch gekennzeichnet, dass**
das Freilaufglied (19) sich bei einer Lastflussänderung der Kuppelpartner (17a, 17b) selbsttätig zurücksetzt.

9. Vorrichtung, aufweisend eine Getriebeanordnung nach Anspruch 7 oder 8,
**dadurch gekennzeichnet, dass**
eine Entfernung des Kuppelpartners (17a, 17b) von dem Begrenzungsanschlag (23) gegen eine Rückstellkraft erfolgt.

10. Vorrichtung, aufweisend eine Getriebeanordnung nach einem der Ansprüche 4 bis 9,
**dadurch gekennzeichnet, dass**
das Freilaufglied (19) eine Entlastung von Kuppelkräften an der zweiten Überholkupplung (18) bewirkt.

11. Vorrichtung, aufweisend eine Getriebeanordnung nach einem der Ansprüche 1 bis Anspruch 10,
**dadurch gekennzeichnet, dass**
die Vorrichtung einen Federspeicher (6) aufweist.

12. Vorrichtung, aufweisend eine Getriebeanordnung nach einem der Ansprüche 1 bis 11,
**dadurch gekennzeichnet, dass**
die Getriebeanordnung Teil eines Federspeicherantriebes ist.

13. Vorrichtung, aufweisend eine Getriebeanordnung nach einem der Ansprüche 1 bis 12,
**dadurch gekennzeichnet, dass**
die Vorrichtung ein elektrisches Schaltgerät aufweist.

## Claims

1. Device comprising a transmission assembly having a first override clutch (17), in particular for transmitting a torque, which has a first coupling partner (17a) and a second coupling partner (17b) that engage or disengage depending on a change in a load flow between the coupling partners (17a, 17b), wherein the first override clutch (17) is assigned a freewheeling member (19) which in particular temporarily neutralizes an engagement of the coupling partners (17a, 17b),
**characterized in that**
an elastic connection of one coupling partner (17a, 17b) to a further transmission element (2) is formed by way of the freewheeling member (19).

2. Device comprising a transmission assembly according to Claim 1,
**characterized in that**
the freewheeling member (19) has a freewheeling path section which is larger than a path section of an engagement movement required for engaging the coupling partners (17a, 17b).

3. Device comprising a transmission assembly according to either Claim 1 or Claim 2,
**characterized in that**
one of the coupling partners (17a, 17b) is connected to a first detent (21, 22).

4. Device comprising a transmission assembly according to one of Claims 1 to 3,
**characterized in that**
the first override clutch (17) forms a bearing for a shaft (13) .

5. Device comprising a transmission assembly according to Claim 4,
**characterized in that**
a second override clutch (18) is coupled to the shaft (13).

6. Device comprising a transmission assembly according to either Claim 4 or 5,
**characterized in that**
the first and the second override clutches (17, 18) have blocking actions in the same direction.

7. Device comprising a transmission assembly according to one of Claims 1 to 6,
**characterized in that**
the freewheeling member (19) enables a movement relative to a delimitation detent (23) by one of the coupling partners (17a, 17b), in particular in the engaged state.

8. Device comprising a transmission assembly according to one of Claims 1 to 7,
**characterized in that**
the freewheeling member (19) in the case of a change in the load flow of the coupling partners (17a, 17b) resets itself in a self-acting manner.

9. Device comprising a transmission assembly according to either Claim 7 or 8,
**characterized in that**
removal of the coupling partner (17a, 17b) from the delimitation detent (23) is performed counter to a restoring force.

10. Device comprising a transmission assembly according to one of Claims 4 to 9,
**characterized in that**
the freewheeling member (19) effects de-stressing of coupling forces on the second override clutch (18).

11. Device comprising a transmission assembly according to one of Claims 1 to 10,
**characterized in that**
the device has a spring-loaded mechanism (6).

12. Device comprising a transmission assembly according to one of Claims 1 to 11,
**characterized in that**
the transmission assembly is part of a spring-loaded mechanism drive.

13. Device comprising a transmission assembly according to one of Claims 1 to 12,
**characterized in that**
the device has an electric switching apparatus.

## Revendications

1. Dispositif comportant un système d'engrenage ayant un premier accouplement (17) de rattrapage, notamment pour transmettre un couple, qui a un premier partenaire (17a) d'accouplement et un deuxième partenaire (17b) d'accouplement, lesquels s'accouplent ou se désaccouplent en fonction d'une variation du flux de charge entre les partenaires (17a, 17b) d'accouplement, dans lequel,
au premier accouplement (17) de rattrapage est associé un élément (19) de roue libre, qui neutralise un accouplement des partenaires (17a, 17b) d'accouplement, notamment de temps en temps,
**caractérisé en ce qu'**
il est formé, par l'élément (19) de roue libre, une liaison élastique d'un partenaire (17a, 17b) d'accouplement à un autre élément (2) de l'engrenage.

2. Dispositif comportant un système d'engrenage suivant la revendication 1,
**caractérisé en ce que**
l'élément (19) de roue libre a une distance de course libre, qui est plus grande qu'une distance nécessaire d'un déplacement d'accouplement pour l'accouplement des partenaires (17a, 17b) d'accouplement.

3. Dispositif comportant un système d'engrenage suivant la revendication 1 ou la revendication 2,
**caractérisé en ce que**
l'un des partenaires (17a, 17b) d'accouplement est relié à une première butée (21, 22).

4. Dispositif comportant un système d'engrenage suivant l'une des revendications 1 à 3,
**caractérisé en ce que**
le premier accouplement (17) de rattrapage forme un palier pour un arbre (13).

5. Dispositif comportant un système d'engrenage suivant la revendication 4,
caractérisé en ce que'
un deuxième accouplement (18) de rattrapage est accouplé à l'arbre (13).

6. Dispositif comportant un système d'engrenage suivant l'une des revendications 4 ou 5,
**caractérisé en ce que**
le premier et le deuxième accouplements (17, 18) de rattrapage ont des effets de blocage dans le même sens.

7. Dispositif comportant un système d'engrenage suivant l'une des revendications 1 à 6,
**caractérisé en ce que**
l'élément (19) de roue libre rend possible un déplacement de l'un des partenaires (17a, 17b) d'accouplement, notamment à l'état accouplé, par rapport à une butée (23) de limitation.

8. Dispositif comportant un système d'engrenage suivant l'une des revendications 1 à 7,
**caractérisé en ce que**
l'élément (19) de roue libre revient automatiquement en position initiale, s'il se produit une variation du flux de charge des partenaires (17a, 17b) d'accouplement.

9. Dispositif comportant un système d'engrenage suivant la revendication 7 ou 8,
**caractérisé en ce qu'**
un éloignement du partenaire (17a, 17b) d'accouplement de la butée (23) de limitation se produit à l'encontre d'une force de rappel.

10. Dispositif comportant un système d'engrenage suivant l'une des revendications 4 à 9,
**caractérisé en ce que**
l'élément (19) de roue libre provoque une décharge des forces d'accouplement sur le deuxième accouplement (18) de rattrapage.

11. Dispositif comportant un système d'engrenage suivant l'une des revendications 1 à la revendication 10,
**caractérisé en ce que**
le dispositif a un ressort (6) accumulateur.

12. Dispositif comportant un système d'engrenage suivant l'une des revendications 1 à 11,
**caractérisé en ce que**
le système d'engrenage fait partie d'une transmission à ressort accumulateur.

13. Dispositif comportant un système d'engrenage suivant l'une des revendications 1 à 12,
**caractérisé en ce que**
le dispositif a un appareil de commutation électrique.
